(19) Europäisches Patentamt
European Patent Office
Office européen des brevets

(11) **EP 2 787 241 A1**

(12) **EUROPEAN PATENT APPLICATION**
published in accordance with Art. 153(4) EPC

(43) Date of publication:
**08.10.2014 Bulletin 2014/41**

(51) Int Cl.:
**F16F 7/12** (2006.01)     **C08J 5/04** (2006.01)
**F16F 7/00** (2006.01)

(21) Application number: **12852689.4**

(22) Date of filing: **27.11.2012**

(86) International application number:
**PCT/JP2012/080632**

(87) International publication number:
**WO 2013/080974 (06.06.2013 Gazette 2013/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2011   JP 2011259046
07.12.2011   JP 2011268176**

(71) Applicant: **TEIJIN LIMITED
Chuo-ku
Osaka-shi
Osaka 541-0054 (JP)**

(72) Inventors:
• **ARAI Tsukasa
Gotemba-shi
Shizuoka 412-0048 (JP)**
• **KONAGAI Yuhei
Gotemba-shi
Shizuoka 412-0048 (JP)**
• **OOTSUBO Makoto
Gotemba-shi
Shizuoka 412-0048 (JP)**
• **TESHIMA Masatomo
Gotemba-shi
Shizuoka 412-0048 (JP)**

(74) Representative: **Carpmaels & Ransford LLP
One Southampton Row
London WC1B 5HA (GB)**

(54) **SHOCK ABSORPTION MEMBER**

(57)     A shock absorption member which is lightweight, has a high degree of freedom in shape, and is capable of efficiently absorbing shock energy, is provided.

A shock absorption member including a bottom surface part and an upright part provided on the bottom surface part, in which at least one of the bottom surface part and the upright part includes a carbon-fiber-reinforced composite material including a thermoplastic resin, and the other may include a thermoplastic resin, and in which the amount of the thermoplastic resin present therein is 30 to 1,000 parts by mass based on 100 parts by mass of carbon fibers, and the average fiber length of the carbon fibers is 3 to 100 mm.

*FIG. 1*

**Description**

Technical Field

The present invention relates to a shock absorption member which is lightweight and includes a bottom surface part and an upright part provided on the bottom surface part, in which at least one of the bottom surface part and the upright part includes a carbon-fiber-reinforced composite material including a thermoplastic resin, and the other may include a thermoplastic resin, and also relates to a shock absorption member which is preferably used in a moving vehicle such as an airplane, an automobile, a train and a two-wheeled vehicle. Further, the present invention also relates to a method for manufacturing the shock absorption member.

Background Art

Various shock absorption members have been adopted in a moving vehicle in order to absorb shock during collision to protect human bodies or vehicle bodies. Recently, from the viewpoint of enhancing the fuel efficiency, or enhancing the driving performance, of a moving vehicle, requirements for reduction in weight have been increased, and lightweight and high rigidity have been required for cases or members used in the moving vehicle. Meanwhile, a higher level tends to be required for safety during collision, and compatibility of lightweight and shock absorption becomes more and more important.

From this background, a plurality of shock absorption members, in which a resin or composite material is used, is disclosed. For example, Patent Document 1 discloses an energy absorption member made of a fiber-reinforced composite material formed as plural layers by cross-stacking long fibers. Accordingly, the energy absorption member may absorb shock energy fairly well, but is limited at a site which may be used due to low degree of freedom in shape. In addition, since long fibers need to be cross-stacked within a certain range, molding becomes complicated, and the manufacturing tact and manufacturing cost were high.

Meanwhile, Patent Document 2 discloses an energy absorption member in which a fiber-reinforced resin into which short fibers are incorporated is used. However, since the amount of energy absorbed per mass of the member is low in the fiber-reinforced resin into which short fibers are incorporated, the mass of the member capable of absorbing high energy is heavy.

Related Art

Patent Documents

Patent Document 1: Japanese Patent Application Laid-Open No. 2010-138953
Patent Document 2: Japanese Patent Application Laid-Open No. H6-123322

Summary of Invention

Problems to Be Solved by Invention

An object of the present invention is to provide a shock absorption member which is lightweight, has a high degree of freedom in shape, and may efficiently absorb shock energy.

Means for Solving the Problems

As a result of intensive studies for achieving the aforementioned object, the present inventors have reached the present invention. That is, the present invention relates to: a shock absorption member including a bottom surface part and an upright part provided on the bottom surface part, in which at least one of the bottom surface part and the upright part includes a carbon-fiber-reinforced composite material including a thermoplastic resin, and the other may include a thermoplastic resin, and in which an amount of the thermoplastic resin present in the shock absorption member is 30 to 1,000 parts by mass based on 100 parts by mass of carbon fibers, and an average fiber length of the carbon fibers is 3 to 100 mm; and a manufacturing method thereof.

Effects of Invention

According to the present invention, it is possible to provide a shock absorption member which is lightweight, has a high degree of freedom in shape, and may efficiently absorb shock energy. Furthermore, it is possible to provide a method for manufacturing a shock absorption member which is lightweight, has a high degree of freedom in shape, and may efficiently absorb shock energy with high efficiency.

Brief Description of Drawings

FIG. 1 is a perspective view of a first embodiment (a shock absorption member in which an upright part has a cross column shape) of the present invention.
FIG. 2 is a perspective view of a second embodiment (a shock absorption member in which an upright part has a cylindrical column shape) of the present invention.
FIG. 3 is a perspective view of a third embodiment (a shock absorption member in which an upright part has a hollow polygonal column shape (hollow hexagonal shape)) of the present invention.
FIG. 4 is a perspective view of a forth embodiment (a shock absorption member in which an upright part has a honeycomb column shape) of the present invention.
FIG. 5 is a perspective view of a fifth embodiment (a shock absorption member in which an upright part has a column shape of which the cross section is lattice-shaped) of the present invention.
FIG. 6 is a perspective view of a sixth embodiment (a shock absorption member in which an upright part has a column shape of which the cross section is triangular lattice-shaped) of the present invention.
FIG. 7 is a perspective view of a seventh embodiment (a shock absorption member in which an upright part has a corrugated panel shape) of the present invention.
FIG. 8 is a perspective view of an eighth embodiment (a shock absorption member in which an upright part has a column shape of which the cross section is lattice-shaped) of the present invention.
FIG. 9 is a perspective view of a ninth embodiment (a shock absorption member in which an upright part has a honeycomb column shape) of the present invention.
FIG. 10 is a perspective view of a tenth embodiment (a shock absorption member in which an upright part has a cross column shape) of the present invention.
FIG. 11 is a perspective view of an eleventh embodiment (a shock absorption member in which an upright part has a hollow truncated cone shape) of the present invention.
FIG. 12 is a perspective view of a twelfth embodiment (a shock absorption member in which an upright part has a cylindrical column shape of which the thickness is changing stepwise, and having a shape in which the top of the upright part becomes thicker than the bottom of the upright part) of the present invention.
FIG. 13 is a perspective view of a thirteenth embodiment (a shock absorption member in which an upright part has a cylindrical column shape of which the thickness is changing stepwise, and having a shape in which the bottom of the upright part becomes thicker than the top of the upright part) of the present invention.
FIG. 14 is a perspective view of a fourteenth embodiment (a shock absorption member in which an upright part has a column shape of which the cross section is lattice-shaped, and further having a columnar upright part at a lattice-shaped central part) of the present invention.
FIG. 15 is a perspective view of a fifteenth embodiment (a shock absorption member in which an upright part has a hollow polygonal column shape (hollow pentagonal shape)) of the present invention.

Embodiments for Carrying Out the Invention

Hereinafter, embodiments of a shock absorption member of the present invention will be described, but the present invention is not limited thereto.

[Shock Absorption Member]

A shock absorption member of the present invention is a shock absorption member including a bottom surface part and an upright part provided on the bottom surface part, in which at least one of the bottom surface part and the upright part includes a carbon-fiber-reinforced composite material including a thermoplastic resin, and the other may include a thermoplastic resin, and in which an amount of the thermoplastic resin present in the shock absorption member is 30 to 1,000 parts by mass based on 100 parts by mass of carbon fibers, and an average fiber length of the carbon fibers is 3 to 100 mm. Additionally, the shock absorption member of the present invention may include a shaped product of a carbon-fiber-reinforced composite material, or also be a use of the shaped product.

It is preferred that the shock absorption member of the present invention has a bottom surface part and an upright part which is elongated in a direction perpendicular to the bottom surface part. The upright part may not be strictly right-angled with respect to the bottom surface part as long as the upright part is in the direction perpendicular to the bottom surface part, and it is possible to take any angle or an angle for securing a draft angle of a mold to such an extent that the intention of the present invention is not impaired. In this case, the angle between the bottom surface part and the upright part is preferably 30 to 90 degrees, more preferably 40 to 90 degrees. It is also possible to add any chamfering or curvature between the bottom surface part and the upright part to such an extent that the intention of the present invention is not impaired. The dimension of the chamfering or curvature is not particularly limited, but it is preferred that the dimension is C 0.2 to 10 mm for the chamfering and the dimension is R 0.2 to 10 mm for the curvature.

The number of upright parts provided on the bottom surface part is not limited, and may be one or plural numbers.

The upright part and the bottom surface part may be integrally molded, and each of the parts may be molded as a separate member and then joined together, for example, the upright part may be molded of a carbon fiber composite material and the bottom surface part may be molded of a thermoplastic resin, but it is preferred that the parts are integrally molded in order to efficiently absorb energy. That is, the shock absorption member of the present invention is preferably a shock absorption member in which both the bottom surface part and the upright part are made of a carbon-fiber-reinforced composite material.

[Bottom Surface Part]

In the shock absorption member of the present invention, the bottom surface part refers to a site which is substantially planar and underlies the upright part. The bottom surface part needs not be completely planar, and may have a partial unevenness or bead. The height and the width of the unevenness and the bead are not particularly limited, but it is preferred that the height is 0.5 to 2 times larger than the plate thickness of the underlying bottom surface part. In addition, the bottom surface part may have a through-hole for ventilation, bolt fastening, and the wiring on the bottom surface. In this case, a hole may be opened by using a shear and the like in the mold simultaneously with the molding of the shock absorbing member (shaped product), and the hole may also be opened with drilling, punching, cutting processes and the like as a post process. The plate thickness of the bottom surface part is not particularly limited, but is preferably 0.2 to 5 mm, more preferably 1 to 3 mm.

The plate thickness of the bottom surface part needs not be uniform, and may also be locally increased or decreased. In this case, the range of increase or decrease in the plate thickness is not particularly limited, but is preferably 30 to 300%, more preferably 50 to 200% of the plate thickness of the underlying bottom surface part. It is also possible to vary the plate thickness stepwise, and also to continuously vary the plate thickness by allowing the plate thickness to have a taper or a curvature, but it is preferred that the plate thickness is continuously varied from the viewpoint of avoiding stress concentration.

[Upright Part]

In the shock absorption member of the present invention, the upright part refers to a site which is elongated in a direction perpendicular, on the same side, to the aforementioned bottom surface part, and examples thereof include ribs and bosses. The height of the upright part is not particularly limited, but is preferably 1 to 300 mm, more preferably 5 to 100 mm. The height of the upright part needs not be uniform, and may also be locally increased or decreased. The range of increase or decrease in height of the upright part is not particularly limited, and is preferably 10 to 90%, more preferably 20 to 80% of the maximum height. The height of the upright part is preferably two times or more, more preferably five times or more the plate thickness of the bottom surface part. The upper limit of the height of the upright part is not particularly limited, but when the height is 1500 times or less the plate thickness of the bottom surface part, the height is sufficient for most uses, and when the height is 100 times or less the plate thickness of the bottom surface part, the height is sufficient for many uses.

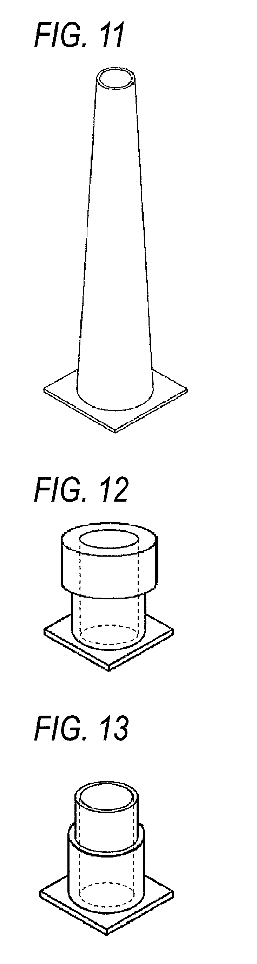

The plate thickness of the upright part is not particularly limited, and may be the same as or different from that of the bottom surface part. Since there are many cases where a more complex shape is required for the upright part than for the bottom surface part, the plate thickness of the upright part is preferably 0.2 to 100 mm, more preferably 1 to 50 mm. The plate thickness of the upright part needs not be uniform, and may also be locally increased or decreased. In this case, the range of increase or decrease in the plate thickness is not particularly limited, but is preferably 20 to 500%, more preferably 50 to 200% of the plate thickness of the underlying upright part. It is also possible to vary the plate thickness of the upright part stepwise (for example, FIGS. 12 and 13), and also to continuously vary the plate thickness by allowing the plate thickness to have a taper or a curvature, but it is preferred that the plate thickness is continuously varied from the viewpoint of avoiding stress concentration. In addition, it is preferred that an angle for securing a draft angle of the mold is provided on the upright part to such an extent that the intention of the present invention is not impaired. The draft angle of the mold is preferably 0 to 45 degrees, more preferably 0 to 10 degrees.

For the shock absorption member of the present invention, it is preferred that the upright part thereof has at least one shape selected from the group consisting of a cross column shape, a cylindrical column shape, a hollow polygonal column shape, a honeycomb column shape, a corrugated panel shape, a hollow truncated cone shape, a column shape of which the cross section is lattice-shaped, and a column shape of which the cross section is triangular lattice-shaped.

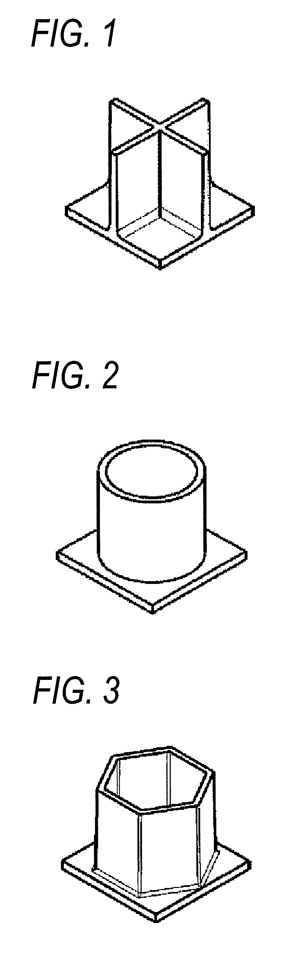

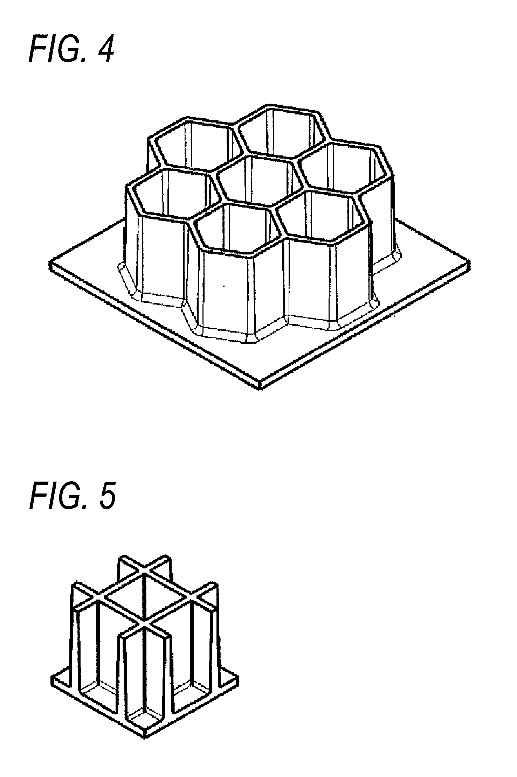

When the shock absorption member of the present invention has a structure in which the upright part thereof has opposing surfaces connected to each other, physical properties thereof are better, which is preferred. Examples of the upright part having opposing surfaces connected to each other include the upright part of which the cross section is lattice-shaped as illustrated in FIG. 5, but the upright part is not limited thereto, and also include an upright part of which the cross section has a hollow polygonal shape illustrated in FIG. 3 and the like, or an upright part having a cylindrical shape as illustrated in FIG. 2.

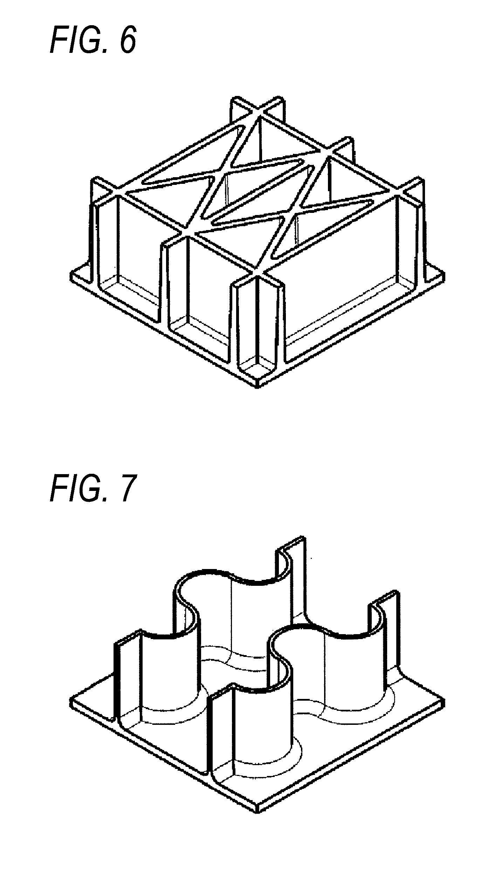

The shock absorption member of the present invention may be a shock absorption member having two or more upright parts as illustrated in FIG. 7.

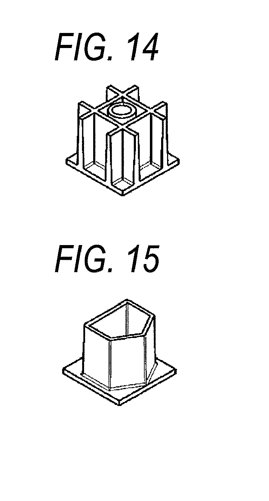

Furthermore, as an embodiment of the shock absorption member including upright parts having a plurality of shapes, a form is exemplified in which plural kinds of shock absorption members are simultaneously used, but further, the embodiment thereof may be, for example, a form in which one shock absorption member includes upright parts having a plurality of shapes, in which an upright part having a round column shape of FIG. 2 is also included in the lattice-shaped central part of the upright part of FIG. 5, as illustrated in FIG. 14.

[Thermoplastic Resin]

The amount of a thermoplastic resin present in the carbon-fiber-reinforced composite material constituting the shock absorption member of the present invention is 30 to 1,000 parts by mass, and preferably 30 to 500 parts by mass based on 100 parts by mass of carbon fibers. The amount of the thermoplastic resin present is more preferably 30 to 200 parts by mass, even more preferably 70 to 160 parts by mass, and particularly preferably 100 to 130 parts by mass, based on 100 parts by mass of carbon fibers.

The thermoplastic resin constituting the shock absorption member is not particularly limited, but preferred examples thereof include at least one selected from the group consisting of a vinyl chloride resin, a vinylidene chloride resin, a vinyl acetate resin, a polyvinyl alcohol resin, a polystyrene resin, an acrylonitrile-styrene resin (AS resin), an acrylonitrile-butadienestyrene resin (ABS resin), an acrylic resin, a methacrylic resin, a polyethylene resin, a polypropylene resin, a polyamide resin (for example, a polyamide 6 resin, a polyamide 11 resin, a polyamide 12 resin, a polyamide 46 resin, a polyamide 66 resin and a polyamide 610 resin), a polyacetal resin, a polycarbonate resin, a polyethylene terephthalate resin, a polyethylene naphthalate resin, a polybutylene terephthalate resin, a polyarylate resin, a polyphenylene ether resin, a polyphenylene sulfide resin, a polysulfone resin, polyether sulfone resin, a polyether ether ketone resin, a polylactic resin, and a mixture (resin composition) of two kinds or more selected from those resins. The thermoplastic resin is preferably at least one selected from the group consisting of a polycarbonate resin, a polyester resin, a polycarbonate, an ABS resin, a polyphenylene ether resin, a polyamide resin, and a mixture of two kinds or more selected from those resins, and more preferably a polyamide resin or a polyester resin.

As the aforementioned resin composition, at least one selected from the group consisting of a composition of a polycarbonate resin and a polyester resin, a composition of a polycarbonate and an ABS resin, a composition of a polyphenylene ether resin and a polyamide resin, a composition of a polyamide resin and an ABS resin, and a composition of a polyester resin and a polyamide resin is more preferred.

Furthermore, a functional filler or additive may be contained in the carbon-fiber-reinforced composite material or the thermoplastic resin within the range which does not impair the object of the present invention. Examples thereof include organic/inorganic fillers, a flame retardant, a UV-resistant agent, a pigment, a mold release agent, a softener, a plasticizer, a surfactant and the like, but are not limited thereto.

[Carbon Fibers Included in Shock Absorption Member]

The carbon fibers constituting the shock absorption member of the present invention are discontinuous carbon fibers having an average fiber length from 3 mm to 100 mm. Due to this, the shock absorption member becomes a shock absorption member (shaped product) showing high physical properties not only for static strength and rigidity, but also for impact load or long-term fatigue load. When the average fiber length is less than 3 mm, there is a problem in that physical properties of the shock absorption member deteriorate, and when the average fiber length is longer than 100 mm, there is a problem in that handleability of the carbon fibers becomes poor. The average fiber length of the carbon fibers is preferably 8 mm or more, more preferably 10 mm or more, even more preferably 15 mm or more, and further preferably 20 mm or more. Further, the fiber length of the carbon fibers is preferably 80 mm or less, more preferably 60 mm or less. The average fiber length is particularly preferably 8 mm to 100 mm, even more preferably 8 mm to 80 mm.

For the shock absorption member of the present invention, it is preferred that the ratio of carbon fiber bundles (A) constituted by the carbon fibers, included in the carbon-fiber-reinforced composite material, of the critical single fiber number or more, defined by the following Equation (1), to the total amount of the carbon fibers is 20 vol% or more and 99 vol% or less.

$$\text{Critical single fiber number} = 600/D \qquad (1)$$

(wherein D is an average fiber diameter (μm) of single carbon fibers.)

For the shock absorption member of the present invention, it is more preferred that the ratio of carbon fiber bundles (A) constituted by the carbon fibers, included in the carbon-fiber-reinforced composite material, of the critical single fiber number or more, defined by the aforementioned Equation (1), to the total amount of the carbon fibers in the carbon-fiber-reinforced composite material is 20 vol% or more and less than 99 vol%, and the average number (N) of fibers in the carbon fiber bundles (A) satisfies the following Equation (2).

$$0.7 \times 10^4/D^2 < N < 1 \times 10^5/D^2 \qquad (2)$$

(wherein D is an average fiber diameter (μm) of single carbon fibers.)

When the aforementioned ratio of the carbon fiber bundles (A) to the total amount of the carbon fibers is less than 20 vol%, there is an advantage in that a shock absorption member (shaped product) having excellent surface quality may be obtained, but it is difficult to obtain a shock absorption member (shaped product) having excellent mechanical properties. When the ratio of the carbon fiber bundles (A) exceeds 99 vol%, the crossing portion of the fibers becomes locally thick, so that it is difficult to obtain a thin-walled shock absorption member. The ratio of the carbon fiber bundles (A) is preferably 30 vol% or more and less than 90 vol%, more preferably 30 vol% or more and less than 80 vol%.

Further, when another expression is used with respect to the aforementioned carbon fiber bundles (A), in the carbon-fiber-reinforced composite material constituting the shock absorption member of the present invention, 20 vol% or more and 99 vol% or less of carbon fibers become the carbon fiber bundles (A) constituted by the carbon fibers of the critical single fiber number or more, defined by the above Equation (1), and 1 vol% or more and 80% or less of the other carbon fibers become a single fiber state or the fiber bundles constituted by the carbon fibers of less than the aforementioned critical single fiber number, and are dispersed in the thermoplastic resin.

Furthermore, in the carbon-fiber-reinforced composite material constituting the shock absorption member of the present invention, when the average number (N) of fibers in the carbon fiber bundles (A) constituted by the carbon fibers of the critical single fiber number or more satisfies the following Equation (2), even in the case of a thin-walled shock absorption member having a thickness from about 0.2 mm to 1 mm, the surface is particularly smooth and the thickness is uniform, which is preferred.

$$0.7 \times 10^4/D^2 < N < 1 \times 10^5/D^2 \qquad (2)$$

(wherein D is an average fiber diameter (μm) of single carbon fibers.)

For the average number (N) of fibers in the carbon fiber bundles (A), specifically when the average fiber diameter of carbon fibers is 5 to 7 μm, the critical single fiber number is 86 to 120, and when the average fiber diameter of carbon fibers is 5 μm, the average number of fibers in the fiber bundles is in a range more than 280 and less than 4,000, but among them, the number is preferably 600 to 2,500, more preferably 600 to 1,600. When the average fiber diameter of carbon fibers is 7 μm, the average number of fibers in the fiber bundles is in a range more than 142 and less than 2,040, but among them, the number is preferably 300 to 1,600. The number is more preferably 300 to 800.

When the average number (N) of fibers in the carbon fiber bundles (A) is $0.7 \times 10^4/D^2$ or less, it is difficult to obtain a high fiber volume fraction (Vf). Further, when the average number (N) of fibers in the carbon fiber bundles (A) is $1 \times 10^5/D^2$ or more, a locally thick portion is produced, which is likely to be responsible for voids. For the average number (N) of fibers in the aforementioned carbon fiber bundles (A), the number satisfying the following Equation (2') is more preferred.

$$0.7 \times 10^4/D^2 < N < 6 \times 10^4/D^2 \qquad (2')$$

(wherein D is an average fiber diameter (μm) of carbon fibers.)

It is preferred that the shock absorption member (shaped product) of the present invention has a ratio (hereinafter sometimes abbreviated to Eδ) of 1.0 to 1.3, obtained by dividing a higher value by a smaller value of tensile moduli in any in-plane direction and in a direction perpendicular to the direction in the same plane (hereinafter, sometimes referred to as a 0 degree direction and a 90 degree direction, respectively). The Eδ is an isotropy index of the material, and when the Eδ is less than 2, the shock absorption member is evaluated as being isotropic, and when the Eδ is 1.3 or less, the shock absorption member is evaluated as being particularly excellent in isotropy.

For the shock absorption material of the present invention, the ratio of the amount of the thermoplastic resin present, which is obtained by the following Equation (i) based on the amount of the thermoplastic resin present in the bottom surface part (parts by mass per 100 parts by mass of carbon fibers) and the amount of the thermoplastic resin present in the upright part (parts by mass per 100 parts by mass of carbon fibers), is preferably -60% to +45%, more preferably -40% to +30%, even more preferably -20% to +20%, further preferably -10% to +10%, and particularly preferably 0%, that is, it is particularly preferred that the amounts of the thermoplastic resin present in the bottom surface part and the upright part are the same as each other.

Ratio (%) of the amount of the thermoplastic resin present (%) = 100 × ((Amount of the thermoplastic resin present in the upright part) - (the amount of the thermoplastic resin present in the bottom surface part)) / (the amount of the thermoplastic resin present in the bottom surface part) (i)

In addition, in the shock absorption member, the difference between tensile moduli of the bottom surface part and the upright part is preferably 0% to 12%. The difference (%) between the tensile moduli may be obtained by the following Equation (ii)

$$\text{Difference (\%) between the tensile moduli} = |\text{tensile modulus of the bottom surface part} - \text{tensile modulus of the upright part}|/\text{tensile modulus of the upright part} \times 100 \qquad \text{(ii)}$$

It can be confirmed from the ratio of the tensile moduli of the bottom surface part and the upright part that the difference between the tensile moduli is within the range.

Specific methods will be exemplified below.

First, for a test specimen collected from the upright part of the shock absorption member, the tensile modulus in any in-plane direction is measured, and among the tensile moduli of the test specimen of the aforementioned bottom surface part in the 0 degree direction and in the 90 degree direction, the ratio of the tensile moduli of the bottom surface part and the upright part is calculated by dividing a larger value by a smaller value, using a value close to the tensile modulus of the test specimen of the upright part as the tensile modulus of the bottom surface part. When the ratio of the tensile moduli is 1.12 or less, it is obvious that the difference between the aforementioned tensile moduli is 12% or less.

For the shock absorption member of the present invention, it is preferred that each of the amount of the thermoplastic resin present and the tensile modulus is the same in the bottom surface part and the upright part in the shock absorption member (the difference is 0%).

For the shock absorption member of the present invention, it is more preferred that the ratio of the amounts of the thermoplastic resin present in the bottom surface part and the upright part in the shock absorption member is -60% to +45%, the difference between the tensile moduli of the thermoplastic resin is 0% to 12%, and for the tensile moduli in any in-plane direction of the bottom surface part and in a direction orthogonal to the direction in the same plane, the ratio obtained by dividing a larger value by a smaller value is 1.0 to 1.3.

For the shock absorption member of the present invention, it is more preferred that each of the amount of the thermoplastic resin present and the tensile modulus is the same in the bottom surface part and the upright part in the shock absorption member, and for the tensile moduli in any in-plane direction of the bottom surface part and in a direction orthogonal to the direction in the same plane, the ratio obtained by dividing a larger value by a smaller value is 1.0 to 1.3.

For the shock absorption member of the present invention, it is preferred that the shock absorption efficiency of the shock absorption member is 70 (J/g) or more. The shock absorption efficiency may be appropriately adjusted depending on the site in which the shock absorption member is used, and when the shock absorption efficiency is 70 (J/g) or more, sufficient performance may be exhibited as a shock absorption member. There is no particular problem even when the shock absorption efficiency in the shock absorption member of the present invention is even so high, but if it is allowed to set the upper limit, it may be 500 (J/g), and it further may be 200 (J/g) in a sense of the upper limit of a typical performance range which may be used for many uses.

The shock absorption efficiency may be measured as the energy absorption efficiency by compressing the upright part to 15 mm or more. The energy absorption efficiency may be calculated by dividing the amount of energy absorption obtained by integrating the load-displacement curve from 0 mm to 15 mm of the displacement amount by the mass of the test specimen from the front end up to 15 mm. When the height of the upright part is 15 mm or less, the energy absorption efficiency may be calculated likewise by using the displacement amount up to half the height. For example, the energy absorption efficiency may be measured using a shock compression tester (IM10T-20HV manufactured by IMATEK Co., Ltd.).

<Method for Manufacturing Shock Absorption Member>

A preferred method for manufacturing a shock absorption member according to the present invention is a manufacturing method which includes press-molding a random mat constituted by carbon fibers having an average fiber length from 3 mm to 100 mm and a thermoplastic resin, in which the carbon fibers have a fiber areal weight from 25 g/m$^2$ to 3,000 g/m$^2$ and the ratio of carbon fiber bundles (A) constituted by the carbon fibers of the critical single fiber number or more, defined by the aforementioned Equation (1), to the total amount of the carbon fibers in the random mat is 20 vol% or more and 99 vol% or less.

A more preferred method for manufacturing a shock absorption member according to the present invention is a manufacturing method which includes press-molding a random mat constituted by carbon fibers having a fiber length from 3 mm to 100 mm and a thermoplastic resin, in which the carbon fibers have a fiber areal weight from 25 g/m$^2$ to 3,000 g/m$^2$, the ratio of carbon fiber bundles (A) constituted by the carbon fibers of the critical single fiber number or more, defined by the aforementioned Equation (1), to the total amount of the carbon fibers in the random mat is 20 vol% or more and less than 99 vol%, and the average number (N) of fibers in the carbon fiber bundles (A) satisfies the aforementioned Equation (2).

In terms of a manufacturing efficiency, it is preferred that a shock absorption member having a bottom surface part and an upright part is obtained by performing press-molding one time, but the shock absorption member may be manufactured by separately molding the bottom surface part and the upright part, and then joining these parts, and may be manufactured by obtaining one of the bottom surface part and the upright part by press-molding the random mat as described above, obtaining the other by another method, and joining these parts.

By the manufacturing method of the present invention, it is possible to obtain a shock absorption member which may absorb shock energy fairly well even though being thin and lightweight, and also has a high degree of freedom in shape.

A hot press may also be applied, in which a mold is heated to a softening temperature or more of a thermoplastic resin to perform press-molding, and then the mold and a product are cooled to the softening temperature or less of the thermoplastic resin, and a cold press may also be applied, in which a prepreg using a random mat is heated to a softening temperature or more of a thermoplastic resin and press-molding is performed with a mold having a temperature which is equal to or less than the softening temperature of the thermoplastic resin. Meanwhile, the softening temperature of a thermoplastic resin in the present invention refers to a melting temperature when the thermoplastic resin is crystalline, and to a glass transition temperature when the thermoplastic resin is amorphous.

<<Random Mat>>

The random mat used in the method for manufacturing a shock absorption member according to the present invention is constituted by carbon fibers having an average fiber length from 3 mm to 100 mm and a thermoplastic resin in which the carbon fibers have a fiber areal weight from 25 g/m$^2$ to 3,000 g/m$^2$, the ratio of carbon fiber bundles (A) constituted by the carbon fibers of the critical single fiber number or more, defined by the aforementioned Equation (1), to the total amount of the fibers in the random mat is 20 vol% or more and 99 vol% or less, and the average number (N) of fibers in the carbon fiber bundles (A) satisfies the aforementioned Equation (2).

The random mat in the present invention refers to a random mat in which a thermoplastic resin is attached to a mat-like material in which carbon fibers are entangled with each other.

Details on the carbon fibers, the thermoplastic resin and the carbon fiber bundles (A) in the random mat are the same as those described above on the carbon-fiber-reinforced composite material constituting the shock absorption member, but are supplemented as follows.

In a plane of the random mat, carbon fibers are not aligned in a specific direction, but are dispersed and oriented in random directions. It is preferred that the random mat used in the manufacturing method of the present invention is an isotropic material. When a shock absorption member is obtained from the random mat, the isotropy of carbon fibers in the random mat is also maintained in the shock absorption member. It is possible to quantitatively evaluate the isotropy of a random mat and a shock absorption member obtained from the same, by obtaining the shock absorption member from the random mat, and obtaining a ratio (Eδ) of a larger value to a smaller value of the tensile moduli in the two directions orthogonal to each other for the shock absorption member. A shock absorption member having an Eδ less than 2 is evaluated as being isotropic, and a shock absorption member having an Eδ of 1.3 or less is evaluated as being particularly excellent in isotropy.

First, the random mat used in the manufacturing method of the present invention is advantageous in that a shock absorption member having excellent surface quality may be obtained when the ratio of the carbon fiber bundles (A) to the total amount of fibers in the random mat is less than 20 vol%, but it is difficult to obtain a shock absorption member having excellent mechanical properties. When the ratio of the carbon fiber bundles (A) exceeds 99 vol%, the crossing portion of the fibers becomes locally thick, so that it is difficult to obtain a thin-walled shock absorption member. The ratio of the carbon fiber bundles (A) in the random mat is preferably 30 vol% or more and less than 90 vol%, and more preferably 30 vol% or more and less than 80 vol%.

As described above on the carbon fiber composite material constituting the shock absorption member of the present invention, the random mat is also preferred as long as the average number (N) of fibers in the carbon fiber bundles (A) satisfies the aforementioned Equation (2). When a random mat having an average number (N) of fibers of $0.7 \times 10^4/D^2$ or less is used, it is difficult to obtain a shock absorption member having a high carbon fiber volume fraction (Vf). In addition, when a random mat having an average number (N) of fibers of $1 \times 10^5/D^2$ or more is used, a locally thick portion is produced, which is likely to be responsible for voids. For the average number (N) of fibers in the aforementioned carbon fiber bundles (A), the number satisfying the following Equation (2') is more preferred.

$$0.7 \times 10^4/D^2 < N < 6 \times 10^4/D^2 \qquad (2')$$

(wherein D is an average fiber diameter ($\mu$m) of single carbon fibers.)

Furthermore, when impregnation to molding are performed using the random mat used in the manufacturing method of the present invention, and a thin-walled shock absorption member of 1 mm or less is intended to be obtained, the use of fibers simply separated results in considerable unevenness in fiber density and a failure to obtain good physical properties. Further, when all fibers are opened, it is easy to obtain a thinner shock absorption member, but the entanglement of fibers is increased, and a shock absorption member having a high fiber volume fraction may not be obtained. It is possible to implement a thin-walled shock absorption member having high development rate of physical property by allowing the carbon fiber bundles (A) constituted by the carbon fibers of the critical single fiber number or more, defined by the aforementioned Equation (1), and carbon fibers (B) in a state of single fibers or constituted by the carbon fibers of less than the critical single fiber number to be simultaneously present in the shock absorption member. The manufacturing method of the present invention may provide shock absorption members having various thicknesses, but is particularly suitable for obtaining a thin-walled shock absorption member having a thickness from about 0.2 mm to 1 mm.

The thickness of the random mat used in the manufacturing method of the present invention is not particularly limited, but a random mat having a thickness from 1 mm to 150 mm may be obtained. The thickness from 2 mm to 100 mm is preferred in that effect of the present invention to obtain a shock absorption member which is thinner-walled than the random mat of the present invention is exhibited. Further, the random mat may also be used in the next step after the volume of the random mat is reduced to a thickness easy to use by using a suitable compression or decompression device.

When the amount of carbon fibers and a thermoplastic resin present in the random mat used in the manufacturing method of the present invention is expressed in terms of mass, the amount is preferably 30 to 1,000 parts by mass, more preferably 30 to 500 parts by mass, and even more preferably 50 to 500 parts by mass, based on 100 parts by mass of carbon fibers, and further preferably, the amount of the thermoplastic resin present is 60 to 200 parts by mass based on 100 parts by mass of carbon fibers. When the ratio of the thermoplastic resin to 100 parts by mass of carbon fibers is less than 30 parts by mass, voids are easily produced in the carbon-fiber-reinforced composite material obtained, so that there is concern in that strength or rigidity may be lowered. On the contrary, when the ratio of the thermoplastic resin is larger than 1,000 parts by mass, it may be difficult for the effect of reinforcement of carbon fibers to be exhibited.

<Prepreg>

In the present invention, when a cold press-molding is performed, the random mat is heated to a temperature that is a softening temperature or higher of the thermoplastic resin contained in the random mat and less than the thermal decomposition temperature thereof, that is, the random mat is heated to a temperature that is the melting temperature or higher and less than the thermal decomposition temperature in the case where the thermoplastic resin is crystalline, and to a temperature that is the glass transition temperature or higher and less than the thermal decomposition temperature in the case where the resin is amorphous, so that the carbon fibers is impregnated with the thermoplastic resin to obtain a prepreg, and it is used in molding. The form of carbon fibers in the prepreg maintains a state in the random mat. That is, carbon fibers in the prepreg maintain the fiber length or isotropy and opening degrees in the random mat, and are the same as the description on the aforementioned random mat.

That is, the present invention also includes the aforementioned method for manufacturing a shock absorption member, in which the shock absorption member is obtained by: providing a prepreg obtained by heating a random mat constituted by carbon fibers having a fiber length from 3 mm to 100 mm and a thermoplastic resin, in which the carbon fibers have a fiber areal weight from 25 g/m$^2$ to 3,000 g/m$^2$, the ratio of carbon fiber bundles (A) constituted by the carbon fibers of the critical single fiber number or more, defined by the aforementioned Equation (1), to the total amount of the carbon fibers in the random mat is 20 vol% or more and less than 99 vol%, and the average number (N) of fibers in the carbon fiber bundles (A) satisfies the aforementioned Equation (2), to a temperature that is the softening temperature or higher and less than the thermal decomposition temperature of the thermoplastic resin; and press-molding the prepreg.

In addition, in the present application, as the thermal decomposition temperature of the thermoplastic resin, the thermal decomposition temperature in air may be exemplified.

Examples

The present invention will be described in more detail with reference to Examples, but the present invention is not limited to the Examples at all.

Furthermore, for the thermoplastic resin used, the melting temperature and the thermal decomposition temperature (in air) of Nylon 6 are 225°C and 300°C, respectively, and the melting temperature and the thermal decomposition temperature (in air) of polybutylene terephthalate are 230°C and 300°C, respectively.

1) Analysis of Carbon Fiber Bundles in Random Mat

A random mat with a size of about 100 mm×100 mm is cut. Fiber bundles are all extracted by tweezers from the cut random mat, and the bundle number (I) of the carbon fiber bundles (A) and the length (Li) and mass (Wi) of the carbon fiber bundles (A) are measured, and recorded. For fiber bundles that are small to such an extent that the bundles may not be extracted by tweezers, the mass (Wk) thereof is finally measured as a whole. In the measurement of mass, a balance measurable up to 1/100 mg (0.01 mg) is used.

From the fiber diameter (D) of the carbon fibers used in the random mat, the critical single fiber number is calculated, and the carbon fibers are classified into carbon fiber bundles (A) with the critical single fiber number or more, and the others. Furthermore, when two or more kinds of carbon fibers are used, the fibers are classified into each kind, and then measurement and evaluation are performed for each kind. A method of obtaining an average number (N) of fibers in the carbon fiber bundles (A) is as follows.

The number (Ni) of fibers in the individual carbon fiber bundle is obtained from a tex (F) of used carbon fibers by the following equation.

$$Ni = Wi/(Li \times F)$$

The average number (N) of fibers in the carbon fiber bundles (A) is determined from the bundle number (I) of the carbon fiber bundles (A) by the following equation.

$$N = \Sigma\, Ni/I$$

The ratio (VR) of the carbon fiber bundles (A) to the total amount of fibers of the random mat is obtained by the following equation using the density (ρ) of the carbon fibers.

$$VR = \Sigma(Wi/\rho) \times 100/((Wk + \Sigma Wi)/\rho)$$

2) Analysis of Average Fiber Length of Carbon Fibers Included in Shock Absorption Member

For the average fiber length of carbon fibers included in the shock absorption member obtained, the shock absorption member was heated in a furnace at 500°C for about 1 hour to remove a resin, and then lengths of 100 carbon fibers arbitrarily extracted were measured by a pair of vernier calipers and a loupe up to a unit of 1 mm and recorded, and the average fiber length (La) was obtained from lengths (Li, herein, i = an integer from 1 to 100) of all the carbon fibers measured by the following equation.

$$La = \Sigma\, Li/100$$

Further, the average fiber length of the carbon fibers in the random mat may also be measured by the aforementioned method.

3) Analysis of Carbon Fiber Bundles in Shock Absorption Member

For the shock absorption member, measurement was conducted by heating the shock absorption member in a furnace at 500°C for about 1 hour to remove a resin, and then using the method in the aforementioned random mat.

4) Analysis of Fibers and Resin Present in Shock Absorption Member

The mass of the carbon fibers and the resin was calculated by cutting the test specimens from the bottom surface part and the upright part of the shock absorption member, heating the test specimens in a furnace at 500°C for about 1 hour to remove the resin, and measuring the specimen mass before and after the treatment.

5) Measurement of Tensile Modulus in Shock Absorption Member (Tensile Test)

The tensile modulus was measured by using a water jet to cut test specimens from the bottom surface part or the upright part of the shock absorption member, and using a Tensilon universal tester manufactured by A&D Company, Limited. For the test specimen obtained from the bottom surface part, tensile moduli in any in-plane direction and in a direction perpendicular to the direction in the same plane (the 0 degree direction and the 90 degree direction, respectively) were measured, and a ratio ($E\delta$) obtained by dividing the larger value by the smaller value was calculated.
For the test specimen collected from the upright part, the tensile modulus in any in-plane direction was measured. Moreover, among the tensile moduli of the test specimen of the aforementioned bottom surface part in the 0 degree direction and in the 90 degree direction, the value close to the tensile modulus of the test specimen of the upright part was used as the tensile modulus of the bottom surface part, and the ratio was calculated by dividing the larger value by the smaller value.

6) Method of Measuring Shock Absorption Performance

The energy absorption efficiency was measured, using a shock compression tester (IM10T-20HV manufactured by IMATEK Co., Ltd.), by compressing the upright part of the shock absorption member to 15 mm or more. The energy absorption efficiency was calculated by dividing the amount of energy absorption obtained by integrating the load-displacement curve from 0 mm to 15 mm of the displacement amount by the mass of the test specimen from the front end up to 15 mm. When the height of the upright part is 15 mm or less, the same calculation was made by using the displacement amount up to half the height.

[Reference Example 1]

Carbon fibers (TENAX (registered trademark) STS40-24 KS (fiber diameter 7 $\mu$m), manufactured by TOHO TENAX Co., Ltd.) as reinforcing fibers were cut into a fiber length of 10 mm while being widened to a width of 20 mm, and were introduced into a tapered tube at a feed rate of carbon fibers of 820 g/min, and while air was blown to the carbon fibers in the tapered tube to partially open the fiber bundles, the carbon fibers were sprayed on a table provided at a lower portion of a tapered tube outlet.
Furthermore, as a matrix resin, a Nylon 6 (Polyamide 6: hereinafter sometime described as PA6) resin (1015 B manufactured by Ube Industries, Ltd.) having an average particle diameter of about 1 mm and frozen pulverized was supplied to a tapered tube at 1000 g/ min, and was sprayed simultaneously with the carbon fibers to obtain a random mat in which carbon fibers having an average fiber length of 10 mm and PA6 were mixed. The reinforcing fiber (carbon fiber) volume fraction (Vf) of the random mat was 35% and the fiber areal weight of the reinforcing fiber was 910 g/m$^2$. As a result of investigating the average fiber length (La), the ratio of the reinforcing fiber bundles (A), and the average number (N) of fibers of the random mat obtained, the average fiber length (La) was 10 mm, the critical single fiber number defined by Equation (1) was 86, the ratio of the reinforcing fiber bundles (A) to the total amount of fibers in the mat was 33%, and the average number (N) of fibers in the reinforcing fiber bundles (A) was 230. As a result of observing the form of the reinforcing fibers in the random mat, fiber axes of the reinforcing fibers were almost parallel to the plane, and the reinforcing fibers were randomly dispersed in the plane.

[Reference Example 2]

Carbon fibers (TENAX (registered trademark) STS40-24 KS (fiber diameter 7 $\mu$m), manufactured by TOHO

TENAX Co., Ltd.) as reinforcing fibers were cut into a fiber length of 4 mm, and were introduced into a tapered tube at a feed rate of carbon fibers of 240 g/min, and while air was blown to the carbon fibers in the tapered tube to open the fiber bundles until the fiber bundles became almost completely single fibers, the carbon fibers were sprayed on a table provided at a lower portion of a tapered tube outlet.

Further, as a matrix resin, a Nylon 6 resin (1015 B manufactured by Ube Industries, Ltd.) having an average particle diameter of about 1 mm and frozen pulverized was supplied to a tapered tube at 1,400 g/ min, and was sprayed simultaneously with the carbon fibers to obtain a random mat in which carbon fibers having an average fiber length of 4 mm and PA6 were mixed. The reinforcing fiber (carbon fiber) volume fraction (Vf) of the random mat was 10% and the fiber areal weight of the reinforcing fibers was 260 g/m$^2$. As a result of investigating the average fiber length (La), the ratio of the reinforcing fiber bundles (A), and the average number (N) of fibers of the random mat obtained, the average fiber length was 4 mm, the critical single fiber number defined by Equation (1) was 86, and the reinforcing fiber bundles (A) was not observed. As a result of observing the form of the reinforcing fibers in the random mat obtained, fiber axes of the reinforcing fibers were almost parallel to the plane, and the reinforcing fibers were randomly dispersed in the plane.

[Reference Example 3]

Carbon fibers (TENAX (registered trademark) HTS40-12 KS (fiber diameter 7 μm, fiber width 10 mm), manufactured by TOHO TENAX Co., Ltd.) as reinforcing fibers were cut into a fiber length of 30 mm, and were introduced into a tapered tube at a feed rate of carbon fibers of 950 g/min, and while air was blown to the carbon fibers in the tapered tube to partially open the fiber bundles, the carbon fibers were sprayed on a table provided at a lower portion of a tapered tube outlet.

In addition, as a matrix resin, a polybutylene terephthalate resin (hereinafter sometimes described as PBT, DURANEX (registered trademark) 2002 manufactured by Polyplastic Co., Ltd.) having an average particle diameter of about 1 mm and frozen pulverized was supplied to a tapered tube at 1,060 g/ min, and was sprayed simultaneously with the carbon fibers to obtain a random mat in which carbon fibers having an average fiber length of 30 mm and PBT were mixed. The reinforcing fiber (carbon fiber) volume fraction (Vf) of the random mat was 40% and the fiber areal weight of the reinforcing fibers was 1,050 g/m$^2$. As a result of investigating the average fiber length (La), the ratio of the reinforcing fiber bundles (A), and the average number (N) of fibers, the average fiber length (La) of the random mat obtained was 30 mm, the critical single fiber number defined by Equation (1) was 86, the ratio of the reinforcing fiber bundles (A) to the total amount of fibers in the mat was 85%, and the average number (N) of fibers in the reinforcing fiber bundles (A) was 1,500. As a result of observing the form of the reinforcing fibers in the random mat, fiber axes of the reinforcing fibers were almost parallel to the plane, and the reinforcing fibers were randomly dispersed in the plane.

[Example 1]

The random mat obtained in Reference Example 1 was hot-pressed at 260°C and 4 MPa for 5 minutes using a press machine manufactured by Kawasaki Hydromechanics Corp., in which a flat plate mold for impregnation was set, and then cooled to 50°C to obtain a prepreg having a fiber areal weight of 910 g/m$^2$ in reinforcing fibers in which PA6 is present in an amount of 122 parts by mass based on 100 parts by mass of the carbon fibers.

Next, the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 1.

The shape of the present Example is a shape in which the bottom plate part is 30 mm long, 40 mm wide and 3 mm thick, and as the upright part, two ribs each of which the height is 30 mm, the front end part is 2 mm thick, and the taper angle is 1 degree are crossed with each other at a right angle at the center thereof, and the curvature of R 2 mm is applied between the bottom plate part and the upright part. The average fiber of carbon fibers in the shaped product was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.05. The energy absorption efficiency in the configuration was 75 J/g.

[Example 2]

A prepreg was obtained in the same manner as in Example 1 from the random mat obtained in Reference Example 1 and the prepreg obtained was heated to 260°C using an IR oven manufactured by NGK Kilntech Corporation,

and cold-pressed at a pressure of 10 MPa for 60 seconds to obtain a shaped product (shock absorption member) as illustrated in FIG. 2.

The shape of the present Example is a shape in which the bottom plate part is 40 mm long, 40 mm wide and 3 mm thick, and as the upright part, a boss of which the height is 30 mm, the front end part is 2.5 mm thick, the radius of the neutral surface is 15 mm, and the taper angle is 0 degree is provided, and the angle between the bottom plate part and the upright part is 90 degrees. The average fiber length of carbon fibers in the shaped product was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.05. The energy absorption efficiency in the configuration was 113 J/g.

[Example 3]

A prepreg is obtained in the same manner as in Example 1 from the random mat obtained in Reference Example 1, and the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 3.

The shape of the present Example was a regular hexagon in which the bottom plate part is 60 mm long, 60 mm wide and 3 mm thick, the upright part is 45 mm high, the front end part is 2 mm thick, and the taper angle is 1 degree, and the length of a side thereof is 15 mm. Further, the curvature of R 1.5 mm is applied between the bottom plate part and the upright part. The average fiber length of carbon fibers in the shaped product was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.05. The energy absorption efficiency in the configuration was 104 J/g.

[Example 4]

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 4.

The shape of the present Example is a honeycomb structure in which the bottom plate part is 90 mm long, 90 mm wide and 3 mm thick, the upright part is 30 mm high, the front end part is 2 mm thick, and the taper angle is 1 degree. The side of the honeycomb is 15 mm, and the curvature of R 2 mm is applied between the bottom plate part and the upright part. The average fiber length of carbon fibers in the shock absorption member was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.07, and the ratio of the tensile moduli in any in-plane direction of the bottom surface part and in a direction orthogonal to the direction in the same plane was 1.05. The energy absorption efficiency in the configuration was 128 J/g.

[Example 5]

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 5.

The shape of the present Example is a shape in which the bottom plate part is 40 mm long, 40 mm wide and 2 mm thick, and as the upright part, four ribs each of which the height is 30 mm, the front end part is 2 mm thick, and the taper angle is 1.5 degrees are crossed in the shape of the character "#", and the curvature of R 1 mm is applied between the bottom plate part and the upright part. The average fiber length of carbon fibers in the shock absorption member was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.07, and the ratio of the tensile moduli in any in-plane direction of the bottom surface part and in a direction orthogonal to the direction in the same plane was 1.05. The energy absorption efficiency in the configuration was 118 J/g.

[Example 6]

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 6.

The shape of the present Example is a shape in which the bottom plate part is 80 mm long, 80 mm wide and 2 mm thick, and as the upright part, nine ribs of which the height is 25 mm, the front end part is 2 mm thick, and the taper angle is 1.5 degrees are disposed in the shape of the character # and in a cross form, and the curvature of R 1.5 mm is applied between the bottom plate part and the upright part. The average fiber length of carbon fibers in the shock absorption member was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.07, and the ratio of the tensile moduli in any in-plane direction of the bottom surface part and in a direction orthogonal to the direction in the same plane was 1.05. The energy absorption efficiency in the configuration was 86 J/g.

[Example 7]

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 7.

The shape of the present Example is a shape in which the bottom plate part is 80 mm long, 80 mm wide and 3 mm thick, and as the upright part, two ribs each of which the height is 30 mm, the front end part is 2.5 mm thick, the taper angle is 0 degree, and the cross section is corrugated are provided, and the curvature of R 3 mm is applied between the bottom plate part and the upright part. The angle between the bottom plate part and the upright part is 90 degrees. The average fiber length of carbon fibers in the shock absorption member was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.05. The energy absorption efficiency in the configuration was 100 J/g.

[Example 8]

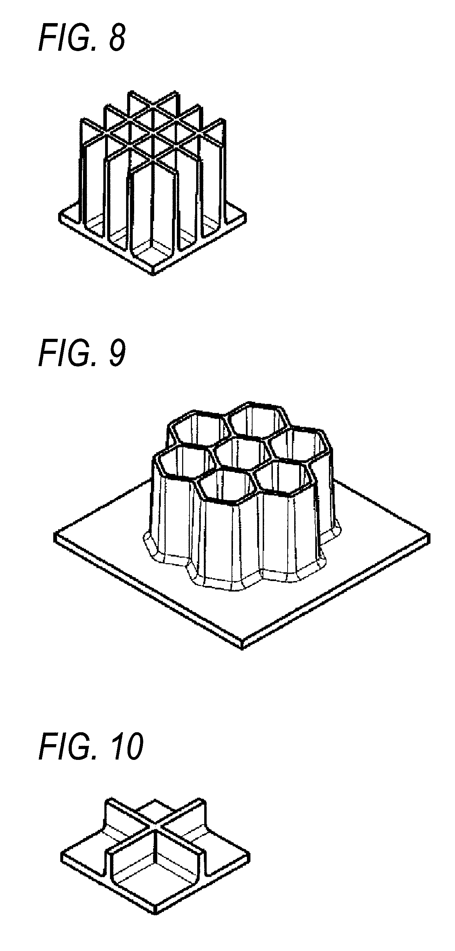

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 8.

The shape of the present Example is a shape in which the bottom plate part is 40 mm long, 40 mm wide and 2.5 mm thick, and as the upright part, six ribs each of which the height is 30 mm, the front end part is 1.5 mm thick, and the taper angle is 1 degree are disposed in the form of a mesh, and a curvature of R 1.5 mm is applied between the bottom plate part and the upright part. The average fiber length of carbon fibers in the shock absorption member was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.07, and the ratio of the tensile moduli in any in-plane direction of the bottom surface part and in a direction orthogonal to the direction within the same plane was 1.05. The energy absorption efficiency in the configuration was 118 J/g.

[Example 9]

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 10 MPa for 60 seconds to obtain a shaped product (shock absorption member) as illustrated in FIG. 9.

The shape of the present Example is a honeycomb structure in which the bottom plate part is 80 mm long, 80 mm wide and 3 mm thick, the upright part is 30 mm high, the front end part is 1.4 mm thick, and the taper angle is 2 degrees. The side of the honeycomb is 10 mm long, and the curvature of R 2 mm is applied between the bottom plate part and the upright part. The average fiber length of carbon fibers in the shock absorption member was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.05. The energy absorption efficiency in the configuration was 136 J/g.

[Example 10]

The random mat obtained in Reference Example 3 was hot-pressed at 260°C and 4 MPa for 5 minutes using a press machine manufactured by Kawasaki Hydromechanics Corp., in which a flat plate mold for impregnation was set, and then cooled to 50°C to obtain a prepreg having a fiber areal weight of 1,050 g/m$^2$ in reinforcing fibers in which PBT is present in an amount of 112 parts by mass based on 100 parts by mass of the carbon fibers. Next, the prepreg obtained was heated to 260°C using an IR oven manufactured by NGK Kilntech Corporation and cold-pressed at a pressure of 10 MPa for 60 seconds to obtain a shape which is the same as that in Example 2. The average fiber length of carbon fibers in the shock absorption member) was 30 mm, the ratio of carbon fiber bundles (A) was 85%, and the average number (N) of fibers in the carbon fiber bundles (A) was 1,500. The amounts of the thermoplastic resin present in the bottom surface part and the upright part were 112 parts by mass and 112 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.02. The energy absorption efficiency in the configuration was 147 J/g.

[Example 11]

A prepreg was obtained in the same manner as in Example 1 from the random mat obtained in Reference Example 1, and the prepreg obtained were heated to 260°C using an IR oven manufactured by NGK Kilntech Corporation and cold-pressed at a pressure of 10 MPa for 60 seconds to obtain a shaped product (shock absorption member) as illustrated in FIG. 10.

The shape of the present Example is a shape in which the bottom plate part is 30 mm long, 40 mm wide and 3 mm thick, and as the upright part, two ribs each of which the height is 10 mm, the front end part is 2 mm thick, and the taper angle is 1 degree are crossed with each other at a right angle at the center thereof, and a curvature of R 2 mm is applied between the bottom plate part and the upright part. The average fiber length of carbon fibers in the shock absorption member was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.05. The energy absorption efficiency in the configuration was 80 J/g.

[Example 12]

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 30 MPa for 60 seconds to obtain a shaped product (shock absorption member) as illustrated in FIG. 11.

The shape of the present Example is a truncated cone shape in which the bottom plate part is 150 mm long, 150 mm wide and 3 mm thick, the upright part is 300 mm high, the front end part is 2.5 mm thick, the radius of the neutral surface is 15 mm, the lower end part is 2.5 mm thick, and the radius of the neutral surface is 30 mm. The average fiber length of carbon fibers in the shock absorption member was 10 mm, the ratio of carbon fiber bundles (A) was 33%, and the average number (N) of fibers in the carbon fiber bundles (A) was 230. The amount of the thermoplastic resin present in the bottom surface part was 122 parts by mass based on 100 parts by mass of the carbon fibers, the ratio of the tensile moduli in the bottom surface part and the upright part was 1.00, the amount of the thermoplastic resin present in the upright part was 122 parts by mass, and the ratio of the tensile moduli in any in-plane direction of the bottom surface part and in a direction orthogonal to the direction in the same plane was 1.05. The energy absorption efficiency in the configuration was 89 J/g.

[Example 13]

A prepreg was obtained in the same manner as in Example 1 from the random mat obtained in Reference Example 1, and the prepreg obtained was heated to 260°C using an IR oven manufactured by NGK Kilntech Corporation and cold-pressed at a pressure of 30 MPa for 60 seconds to obtain a shaped product (shock absorption member) as illustrated in FIG. 1.

The shape of the present Example is a shape in which the bottom plate part is 30 mm long, 40 mm wide and 3 mm thick, and as the upright part, two ribs each of which the height is 30 mm, the front end part is 2 mm thick, and the taper angle is 1 degree are crossed with each other at a right angle at the center thereof, and a curvature of R 2 mm is applied between the bottom plate part and the upright part. The average fiber length of carbon fibers in the shaped product was 10 mm, the ratio of carbon fiber bundles (A) was 33%, and the average number (N) of fibers in the carbon fiber bundles (A) was 230. The amounts of the thermoplastic resin present in the bottom surface part and the upright part were 122 parts by mass and 122 parts by mass, respectively, based on 100 parts by mass of the carbon fibers, the ratio of the tensile moduli in the bottom surface part and the upright part was 1.05, and the ratio of the tensile moduli in any in-plane direction of the bottom surface part and in a direction orthogonal to the direction in the same plane was 1.05. The energy absorption efficiency in the configuration was 80 J/g.

[Example 14]

The random mat obtained in Reference Example 2 was hot-pressed at 260°C and 4 MPa for 5 minutes using a press machine manufactured by Kawasaki Hydromechanics Corp., in which a flat plate mold for impregnation was set, and then cooled to 50°C to obtain a prepreg having a fiber areal weight of 260 g/m$^2$ in reinforcing fibers in which PA6 is present in an amount of 583 parts by mass based on 100 parts by mass of the carbon fibers. Next, the prepreg obtained was heated to 260°C using an IR oven manufactured by NGK Kilntech Corporation and cold-pressed at a pressure of 10 MPa for 60 seconds to obtain a shape which is the same as that in Example 2. The average fiber length of carbon fibers in the shaped product (shock absorption member) was 4 mm, and the carbon fiber bundles (A) were not observed. The amounts of the thermoplastic resin present in the bottom surface part and the upright part were 583 parts by mass and 583 parts by mass, respectively, based on 100 parts by mass of the carbon fibers, the ratio of the tensile moduli in the bottom surface part and the upright part was 1.07, and the ratio of the tensile moduli in any in-plane direction of the bottom surface part and in a direction orthogonal to the direction within the same plane was 1.06. The energy absorption efficiency in the configuration was 65 J/g. The energy absorption efficiency was slightly low.

Summary of Examples

Hereinafter, for the aforementioned Examples 1 to 14, the results of the substrate used (random mat) and the shaped product obtained (shock absorption member) were summarized in Tables 1 and 2.

Table 1

|  |  | Ex. 1 | Ex. 2 | Ex. 3 | Ex. 4 | Ex. 5 | Ex. 6 | Ex. 7 |
|---|---|---|---|---|---|---|---|---|
| Substrate | Reference Example | 1 | 1 | 1 | 1 | 1 | 1 | 1 |
|  | Average Fiber Diameter ($\mu$m) of Reinforcing Fibers | 7 | 7 | 7 | 7 | 7 | 7 | 7 |
|  | Thermoplastic Resin | PA6[2) | PA6[2) | PA6[2) | PA6[2) | PA6[2) | PA6[2) | PA6[2) |
|  | Amount of Thermoplastic Resin Present[1) | 122 | 122 | 122 | 122 | 122 | 122 | 122 |

(continued)

| | | Ex. 1 | Ex. 2 | Ex. 3 | Ex. 4 | Ex. 5 | Ex. 6 | Ex. 7 |
|---|---|---|---|---|---|---|---|---|
| Shaped Product | Average Fiber Length (mm) of Reinforcing Fibers | 10 | 10 | 10 | 10 | 10 | 10 | 10 |
| | Amount of Thermoplastic Resin Present[1] | 122 | 122 | 122 | 122 | 122 | 122 | 122 |
| | Ratio (%) of Reinforcing Fiber Bundles (A) | 33 | 33 | 33 | 33 | 33 | 33 | 33 |
| | Average Fiber Bundles (N) of Reinforcing Fiber Bundles (A) | 230 | 230 | 230 | 230 | 230 | 230 | 230 |
| | Ratio ($E\delta$) of Tensile Moduli | 1.05 | 1.05 | 1.05 | 1.05 | 1.05 | 1.05 | 1.05 |
| | Ratio of Tensile Moduli of Bottom Surface Part and Upright Part | 1.05 | 1.05 | 1.05 | 1.07 | 1.07 | 1.07 | 1.05 |
| | Energy Absorption Efficiency (J/g) | 75 | 113 | 104 | 128 | 118 | 86 | 100 |

1) Based on 100 Parts by Mass of Carbon Fibers
2) Polyamide 6
3) Polybutylene Terephthalate

[Table 2]

| | | Ex. 8 | Ex. 9 | Ex. 10 | Ex. 11 | Ex. 12 | Ex. 13 | Ex. 14 |
|---|---|---|---|---|---|---|---|---|
| Substrate | Reference Example | 1 | 1 | 3 | 1 | 1 | 1 | 2 |
| | Average Fiber Diameter ($\mu$m) of Reinforcing Fibers | 7 | 7 | 7 | 7 | 7 | 7 | 7 |
| | Thermoplastic Resin | PA6[2] | PA6[2] | PBT[3] | PA6[2] | PA6[2] | PA6[2] | PA6[2] |
| | Amount of Thermoplastic Resin Present[1] | 122 | 122 | 122 | 122 | 122 | 122 | 583 |
| Shaped Product | Average Fiber Length (mm) of Reinforcing Fibers | 10 | 10 | 30 | 10 | 10 | 10 | 4 |
| | Amount of Thermoplastic Resin Present[1] | 122 | 122 | 122 | 122 | 122 | 122 | 583 |
| | Ratio (%) of Reinforcing Fiber Bundles (A) | 33 | 33 | 85 | 33 | 33 | 33 | - |
| | Average Fiber Bundles (N) of Reinforcing Fiber Bundles (A) | 230 | 230 | 1500 | 230 | 230 | 230 | - |
| | Ratio ($E\delta$) of Tensile Moduli | 1.05 | 1.05 | 1.02 | 1.05 | 1.05 | 1.05 | 1.06 |
| | Ratio of Tensile Moduli of Bottom Surface Part and Upright Part | 1.07 | 1.05 | 1.05 | 1.05 | 1.00 | 1.05 | 1.07 |
| | Energy Absorption Efficiency (J/g) | 118 | 136 | 147 | 80 | 89 | 80 | 65 |

1) Based on 100 Parts by Mass of Carbon Fibers
2) Polyamide 6
3) Polybutylene Terephthalate

Industrial Applicability

According to the present invention, it is possible to provide a shock absorption member which is lightweight, has a high degree of freedom in shape, and may efficiently absorb shock energy.

Furthermore, provided is a method for manufacturing a shock absorption member which is lightweight, has a high degree of freedom in shape, and may efficiently absorb shock energy, with high efficiency.

Although the present invention has been described in detail with reference to specific embodiments, it is obvious to those skilled in the art that various changes or modifications may be made without departing from the spirit and scope of the present invention.

The present application is based on Japanese Patent Application (Patent Application No. 2011-259046) filed on November 28, 2011 and Japanese Patent Application (Patent Application No. 2011-268176) filed on December 7, 2011, the contents of which are incorporated herein by reference.

**Claims**

1. A shock absorption member comprising:

   a bottom surface part; and
   an upright part provided on the bottom surface part,
   wherein at least one of the bottom surface part and the upright part includes a carbon-fiber-reinforced composite material including a thermoplastic resin, and the other may include a thermoplastic resin, and
   wherein an amount of the thermoplastic resin present in the shock absorption member is 30 to 1,000 parts by mass based on 100 parts by mass of carbon fibers, and an average fiber length of the carbon fibers is 3 to 100 mm.

2. The shock absorption member according to claim 1, wherein each of the bottom surface part and the upright part includes a carbon-fiber-reinforced composite material.

3. The shock absorption member of claim 1 or 2, wherein a ratio of the amount of the thermoplastic resin present, which is obtained by the following Equation (i) based on from an amount of the thermoplastic resin present in the bottom surface part (parts by mass per 100 parts by mass of carbon fibers) and an amount of the thermoplastic resin present in the upright part (parts by mass per 100 parts by mass of carbon fibers), is -60% to +45%:

$$\text{Ratio (\%) of the amount of the thermoplastic resin present (\%)} = 100 \times ((\text{the amount of the thermoplastic resin present in the upright part}) - (\text{the amount of the thermoplastic resin present in the bottom surface part})) / (\text{the amount of the thermoplastic resin present in the bottom surface part}) \quad (i).$$

4. The shock absorption member according to any one of claims 1 to 3, wherein a difference between tensile moduli of the bottom surface part and the upright part in the shock absorption member is 0% to 12%.

5. The shock absorption member according to any one of claims 1 to 4, wherein a ratio obtained by dividing a larger value by a smaller value of tensile moduli in any in-plane direction of the bottom surface part and in a direction orthogonal to the direction in the same plane in the shock absorption member is 1.0 to 1.3.

6. The shock absorption member according to any one of claims 1 to 5, wherein a ratio of the amount of the thermoplastic resin present, which is obtained by the following Equation (i) based on from an amount of the thermoplastic resin present in the bottom surface part (parts by mass per 100 parts by mass of carbon fibers) and an amount of the thermoplastic resin present in the upright part (parts by mass per 100 parts by mass of carbon fibers), is -60% to +45%:

Ratio (%) of the amount of the thermoplastic resin present (%) = 100 × ((the amount of the thermoplastic resin present in the upright part) − (the amount of the thermoplastic resin present in the bottom surface part)) / (the amount of the thermoplastic resin present in the bottom surface part) (i),

and
wherein a ratio obtained by dividing a larger value by a smaller value of tensile moduli in any in-plane direction of the bottom surface part and in a direction orthogonal to the direction in the same plane is 1.0 to 1.3.

7. The shock absorption member according to any one of claims 1 to 6, wherein each of the amount of the thermoplastic resin present and the tensile modulus is the same in the bottom surface part and the upright part in the shock absorption member, and
a ratio obtained by dividing a larger value by a smaller value of tensile moduli in any in-plane direction of the bottom surface part and in a direction orthogonal to the direction in the same plane is 1.0 to 1.3.

8. The shock absorption member according to any one of claims 1 to 7, wherein a ratio of carbon fiber bundles (A) constituted by the carbon fibers, included in the carbon-fiber-reinforced composite material, of a critical single fiber number or more, defined by the following Equation (1), to a total amount of the carbon fibers in the carbon-fiber-reinforced composite material is 20 vol% or more and less than 99 vol%, and the average number (N) of fibers in the carbon fiber bundles (A) satisfies the following Equation (2):

$$\text{Critical single fiber number} = 600/D \qquad (1)$$

$$0.7 \times 10^4/D^2 < N < 1 \times 10^5/D^2 \qquad (2)$$

wherein D is an average fiber diameter ($\mu$m) of single carbon fibers.

9. The shock absorption member according to any one of claims 1 to 8, wherein a shock absorption efficiency of the shock absorption member is 70 J/g or more.

10. The shock absorption member according to any one of claims 1 to 9, wherein the upright part has at least one selected from the group consisting of a cross column shape, a cylindrical column shape, a hollow polygonal column shape, a honeycomb column shape, a corrugated panel shape, a hollow truncated cone shape, a column shape of which a cross section is lattice-shaped, and a column shape of which a cross section is triangular lattice-shaped.

11. The shock absorption member according to any one of claims 1 to 10, wherein the shock absorption member includes a structure in which the upright part has opposing surfaces connected to each other.

12. The shock absorption member according to any one of claims 1 to 11, wherein the shock absorption member has two or more upright parts.

13. The shock absorption member according to any one of claims 1 to 12, wherein a height of the upright part is two times or more a plate thickness of the bottom surface part.

14. The shock absorption member according to any one of claims 1 to 13, wherein the shock absorption member has an upright part which is elongated in a direction perpendicular to the bottom surface part.

15. The shock absorption member according to any one of claims 1 to 14, wherein the shock absorption member has a shape in which a plate thickness of the upright part changes stepwise.

16. The shock absorption member according to any one of claims 1 to 15, wherein an amount of the thermoplastic resin present in the shock absorption member is 30 to 500 parts by mass based on 100 parts by mass of the carbon fibers.

**17.** A method for manufacturing a shock absorption member according to any one of claims 1 to 16, which is obtained by press-molding a random mat constituted by carbon fibers having a fiber length from 3 mm to 100 mm and a thermoplastic resin, wherein the carbon fibers have a fiber areal weight from 25 g/m$^2$ to 3,000 g/m$^2$, a ratio of carbon fiber bundles (A) constituted by the carbon fibers of a critical single fiber number or more defined by the aforementioned Equation (1) to a total amount of the carbon fibers in the random mat is 20 vol% or more and less than 99 vol%, and an average number (N) of fibers in the carbon fiber bundles (A) satisfies the aforementioned Equation (2).

**18.** A method for manufacturing the shock absorption member according to any one of claims 1 to 17, which is obtained by:

providing a prepreg obtained by heating a random mat constituted by carbon fibers having a fiber length from 3 mm to 100 mm and a thermoplastic resin, wherein the carbon fibers have a fiber areal weight from 25 g/m$^2$ to 3,000 g/m$^2$, a ratio of carbon fiber bundles (A) constituted by the carbon fibers of a critical single fiber number or more, defined by the aforementioned Equation (1), to a total amount of the carbon fibers in the random mat is 20 vol% or more and less than 99 vol%, and an average number (N) of fibers in the carbon fiber bundles (A) satisfies the aforementioned Equation (2), to a temperature that is a softening temperature or higher and less than a thermal decomposition temperature of the thermoplastic resin; and
press-molding the prepreg.

FIG. 1

FIG. 2

FIG. 3

FIG. 4

FIG. 5

*FIG. 6*

*FIG. 7*

*FIG. 8*

*FIG. 9*

*FIG. 10*

FIG. 11

FIG. 12

FIG. 13

FIG. 14

FIG. 15

## INTERNATIONAL SEARCH REPORT

| | International application No. |
|---|---|
| | PCT/JP2012/080632 |

### A. CLASSIFICATION OF SUBJECT MATTER
*F16F7/12*(2006.01)i, *C08J5/04*(2006.01)i, *F16F7/00*(2006.01)i

According to International Patent Classification (IPC) or to both national classification and IPC

### B. FIELDS SEARCHED

Minimum documentation searched (classification system followed by classification symbols)
F16F7/12, C08J5/04, F16F7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2005-247096 A (Japan GMT Co., Ltd.), 15 September 2005 (15.09.2005), claims; paragraphs [0021], [0022], [0032]; all drawings (Family: none) | 1-18 |
| Y | WO 2009/069649 A1 (Mitsui Chemicals, Inc.), 04 June 2009 (04.06.2009), claims; paragraphs [0129], [0130]; table 1 & US 2010/0311892 A1 & EP 2221339 A1 & CN 101878266 A & KR 10-2010-0089888 A | 1-18 |
| Y | JP 2011-207930 A (Toray Industries, Inc.), 20 October 2011 (20.10.2011), entire text; all drawings; all tables (Family: none) | 17-18 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 January, 2013 (21.01.13) | 29 January, 2013 (29.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 787 241 A1**

**REFERENCES CITED IN THE DESCRIPTION**

**Patent documents cited in the description**

- JP 2010138953 A
- JP H6123322 B
- JP 2011259046 A
- JP 2011268176 A